## Europäisches Patentamt
## European Patent Office
## Office européen des brevets

(11) Veröffentlichungsnummer: **0 032 742**
**B1**

(12) **EUROPÄISCHE PATENTSCHRIFT**

(45) Veröffentlichungstag der Patentschrift:
21.11.84

(51) Int. Cl.³: **A 01 C 5/06**, A 01 C 7/20

(21) Anmeldenummer: 81100338.3

(22) Anmeldetag: 17.01.81

(54) Durch Kraftzug bewegbares Saegerät.

(30) Priorität: 21.01.80 DE 3001958

(43) Veröffentlichungstag der Anmeldung:
29.07.81 Patentblatt 81/30

(45) Bekanntmachung des Hinweises auf die Patenterteilung:
21.11.84 Patentblatt 84/47

(84) Benannte Vertragsstaaten:
AT BE CH FR GB IT LI NL SE

(56) Entgegenhaltungen:
DE - A - 2 640 749
FR - A - 1 489 215
GB - A - 1 156 341

(73) Patentinhaber: Gebr. Köckerling, Lindenstrasse 11, D-4837 Verl (DE)

(72) Erfinder: Köckerling, Friederich, Lindenstrasse 9, D-4837 Verl (DE)

(74) Vertreter: Hoefer, Theodor, Dipl.-Ing., Kreuzstrasse 32, D-4800 Bielefeld 1 (DE)

BUNDESDRUCKEREI BERLIN

## Beschreibung

Die Erfindung bezieht sich auf ein durch Kraftzug bewegbares Saegerät mit einem Saatgutvorratsbehälter und davon ausgehenden Ablegerohren für das Saatgut mit mehreren vorgeschalteten, jeweils eine Saerille in den Boden einarbeitenden Rillenziehvorrichtungen aus Schneidscheiben und Rillenerweiterungsscheiben, zwischen denen jeweils ein Ablegerohr mündet, wobei jede Rillenziehvorrichtung mit einer nachgeschalteten Druckwalze an einem gemeinsamen, an einem Werkzeugträger gelagerten Längsträger angeordnet sind, der mittels einer aus zwei ineinander geführten und gegeneinander abgefederten Führungsrohren gebildeten Führungseinrichtung selbsttätig in der Höhe verstellbar gelagert ist.

Bei derartigen aus der FR-A-1 489 215 bekannten Saegeräten besteht der Nachteil, daß die für die Einlegetiefe der Saat maßgebende Schneidscheibe an einem Längsträger, der die Rillenerweiterungsscheiben und zugeordnete, nachgeschaltete Druckwalze starr hält, schwenkbar gelagert ist, so daß durch die nicht zu verhindernde Auf- und Abwärtsbewegung der Schneidscheibe gegenüber diesem Längsträger die Rillentiefe variiert und damit das Saatgut ungleichmäßig tief abgelegt wird.

Bei einem anderen, aus DE-A-2 640 749 bekannten Saegerät mit Hackschar ist in nachteiliger Weise diese Hackschar mit ihrer mit Rollen ausgestatteten Führungseinrichtung ebenfalls schwenkbar gelagert, so daß eine gleichmäßige Einlegetiefe der Saat auch hierbei nicht gewährleistet ist, da bei Anordnung mehrerer Hackschare an einem Saegerät diese sich gegeneinander laufend im Abstand zueinander verändern.

Aufgabe der Erfindung ist es, bei einem Saegerät der genannten Gattung die die Saerillen ziehenden Werkzeuge derart anzuordnen, daß die Saerillen ohne wesentliche Oberflächenbeschädigungen des Bodens je nach dessen unterschiedlicher Oberflächenbeschaffenheit mit in etwa gleichbleibender Rillentiefe eingearbeitet werden.

Gemäß der Erfindung wird diese Aufgabe bei einem Saegerät der vorgenannten Gattung dadurch gelöst, daß der Längsträger ausschließlich senkrecht verschiebbar an dem Werkzeugträger mittels der Führungseinrichtung gelagert ist, deren äußeres Führungsrohr starr an dem Werkzeugträger und deren inneres Führungsrohr starr an dem Längsträger befestigt sind, und daß das innere Führungsrohr wagenartig mittels Rollen in dem äußeren Führungsrohr teleskopartig verschiebbar gelagert ist, wobei die Rillenziehvorrichtung und die nachgeschaltete Druckwalze gegeneinander gegenüber dem Längsträger lageunveränderlich festgelegt sind.

Bei einem derartigen Saegerät wird im Rahmen einer starren Einheit durch die vordere Schneidscheibe zunächst die Bodenoberfläche eingeschnitten, wobei ein auf dieser Oberfläche noch vorhandener Bewuchs wie Grasnarbe oder Faserreste von Stroh ohne wesentliche Verschiebung durchschnitten werden. Die nachfolgenden, im spitzen Winkel zueinanderstehenden, sich drehenden Rillenerweiterungsscheiben öffnen die Rillen zur Einlage des Saatgutes unter schonender Behandlung des Oberflächenbereiches. Insbesondere wird damit vermieden, daß beim Nachsäen von Grassamen die die Bodenoberfläche bedeckende Grasnarbe in unnötiger Weise beschädigt wird.

Die nachgeschaltete Druckwalze, die lageunveränderlich gegenüber der Rillenziehvorrichtung und dem Längsträger festgelegt ist, steuert diese Rillenziehvorrichtung und insbesondere dabei die Schneidscheiben derart, daß sich jeder Satz (Rillenziehvorrichtung und Druckwalze) auch kleineren Bodenunebenheiten anpassen kann und damit die Saattiefe immer gleichbleibt.

Weitere Merkmale der Erfindung ergeben sich aus den Unteransprüchen.

Auf der Zeichnung ist ein Ausführungsbeispiel der Erfindung dargestellt. Es zeigt

Fig. 1 eine schematische Seitenansicht eines Saegerätes gemäß der Erfindung mit Rillenziehgerät und nachgeschalteter Druckwalze mit oberhalb angeordnetem Vorratsbehälter mit zwischen jeder Rillenziehvorrichtung mündenden Saatgutablegerohr;

Fig. 2 eine Seitenansicht einer Rillenziehvorrichtung mit gemäß der Erfindung zueinander und versetzt angeordneten Werkzeugen;

F i g. 3 eine Draufsicht auf den Längsträger mit Halteeinrichtungen für die Rillenziehvorrichtung mit Druckwalzen;

Fig. 4 einen Teilschnitt desselben Gerätes mit Führungseinrichtung der Rillenziehvorrichtung.

Ein Werkzeugträger 10 ist als Querträger innerhalb eines Rahmens 11 angeordnet, der über ein Dreipunktgestänge 12 höhenverstellbar mit einer Zugmaschine wie Ackerschlepper lösbar verbindbar ist. Dieser Rahmen 11 trägt einen trichterförmigen Vorratsbehälter 13 mit einer in seinem Auslauf drehbar gelagerter Dosierwalze 14, die durch ein am Boden 15 mitlaufendes Rad angetrieben werden kann.

In einer senkrechten Führungseinrichtung, die an Hand der Fig. 4 noch näher beschrieben wird, ist ein senkrechter Träger 17 höhenverschiebbar gelagert, an dem untenseitig ein Längsträger 18 befestigt ist.

An diesem Längsträger 18 ist eine Rillenziehvorrichtung 19 befestigt, die aus drei, sich frei drehenden Scheiben jeweils besteht und zwar einer vorderen mittleren Schneidscheibe 20, zur Rillenöffnung (Einschneiden der Bodenoberfläche) und zwei nachgeschalteten, einen spitzen Winkel zwischen sich einschließenden Rillenerweiterungsscheiben 21a, 21b, deren gedachter Scheitelpunkt in der gedachten Längsebene der vorderen Schneidscheibe 20 liegt und die jeweils sich um Achsen drehen. Sowohl die Achse 20a, um die sich die vordere Schneidscheibe 20 frei dreht, als auch die beiden sich gegenüberliegen-

den Achsen 21a der schneidenden Rillenerweiterungsscheiben 21a, 21b sind an dem Längsträger 18 durch Schweißen o. dgl. befestigt, und damit in ihrer Stellung gegeneinander und gegenüber der rückwärtigen Druckwalzen 22 festgelegt.

Zwischen den jeweils zusammengehörenden Rillenerweiterungsscheiben 21a, 21b mündet jeweils das offene Ende eines Ablegerohres 23, so daß das Saatgut in die durch diese Scheiben 21a, 21b erweiterte Rille in den Boden fällt, bevor diese sich wieder teilweise oder ganz schließt, da die Rillenerweiterungsscheiben 21a, 21b den Erdboden und das darin im Oberflächenbereich vorhandene kürzere oder längere Fasergut wie Grasnarbe, Unkrautfasern, Getreidehalmreste o. dgl., keilartig auseinanderschieben, ohne — wie bei einem Doppelpflugschar durch deren gekrümmte Fläche — das Fasergut oder den Erdboden überkippen zu lassen.

Die sich frei drehenden Scheiben der Rillenziehvorrichtung 19 sollen möglichst keinen senkrechten Druck, wie er bei bekannten Rillenwalzen auf die Rillenwandungen auftritt, ausüben, es soll vielmehr ein ziehender Schnitt erreicht werden, so daß die Bodenoberfläche möglichst wenig — anders wie bei der Arbeit einer Pflugschar — verändert wird.

Durch die sich selbsttätig nicht verändernde Stellung und Lage der Scheiben der Rillenziehvorrichtung 19 sowie der Druckwalze 22 zueinander an dem Längsträger 18 steuert die Druckwalze 22, da sie nur auf der Oberfläche des Bodens läuft, den Abstand des Längsträgers 18 von der oftmals in der Höhe variierenden Oberfläche des Boden und zwar derart, daß dieser Abstand immer gleich bleibt. Dadurch drehen sich die fest mit ihren Achsen daran angeordneten Scheiben 21a, 21b, 20 der Rillenziehvorrichtung 19 immer in der gleichen Bodentiefe, so daß auch bei unterschiedlicher Bodenbeschaffenheit (bei Unebenheiten) die Tiefe der gezogenen oder besser geschnittenen Saatrillen und auch deren Erweiterung (Öffnungsbreite) immer gleichbleibt.

Die Schneidscheiben 20, 21a, 21b ziehen damit in optimaler Weise Saatrillen in den Boden, ohne dessen Oberfläche oder Bewuchs wie Grasnarbe unnötig zu beschädigen und in seiner Lage zu verändern. Die Druckwalze schließt die mit Saatgut gefüllte und ihr zugeordnete Rille in einer ebenfalls sich der Oberfläche des Bodens usw. anpassenden Weise und zwar unabhängig von seitlich benachbarten Druckwalzen, die an benachbarten Längsträgern angeordnet sind.

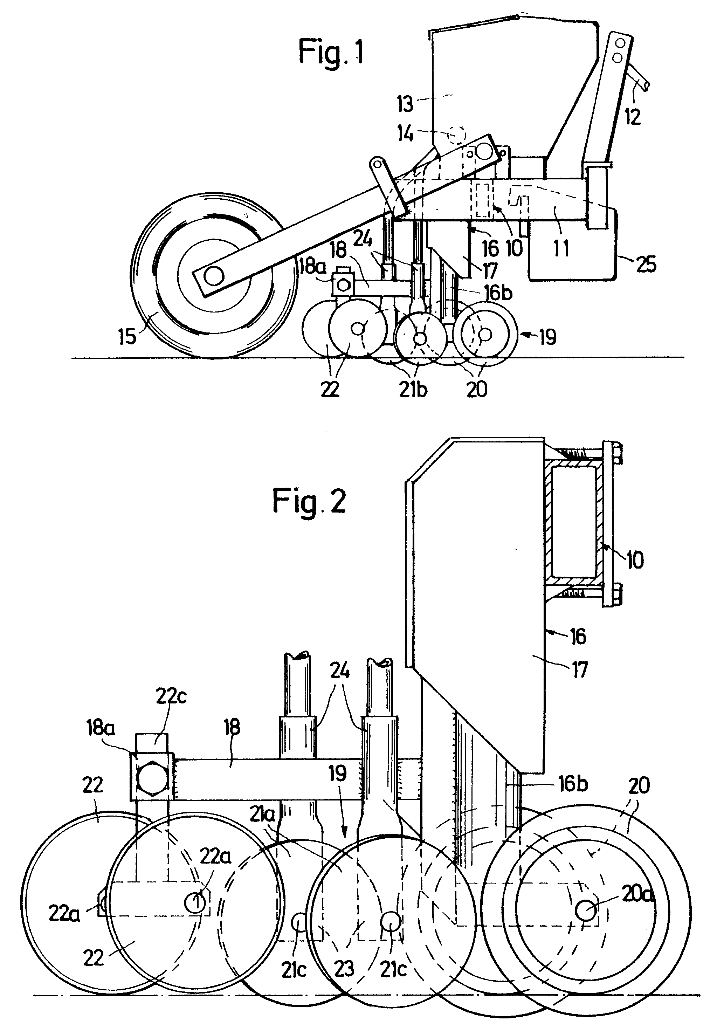

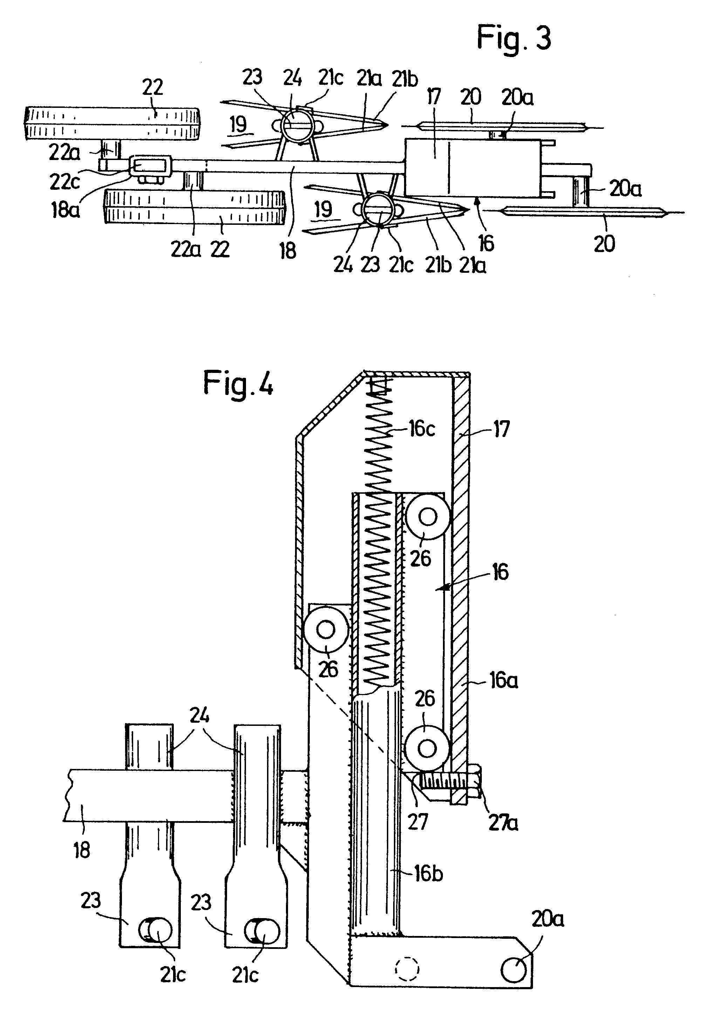

Im Rahmen eines vorteilhaften Ausführungsbeispiels kann es bevorzugt sein, an jedem Längsträger 18 zwei Rillenziehvorrichtungen 19 mit jeweils nachgeschalteter Druckwalze 22 zu befestigen, wobei — wie die Fig. 2 zeigt — die Achsen 21c, 20a der Scheiben und die Achse 22a der Druckwalzen 22 eines Satzes gegenüber den entsprechenden Achsen des benachbarten, an demselben Längsträger befestigten Satzes versetzt sein können, um zwei möglichst enge beieinanderliegende Saatrillen zu ziehen.

Dazu sind an jeden Längsträger 18 auf gegenüberliegenden Seiten und in Längsrichtung (Fahrtrichtung) versetzt zwei Halterohre 24 befestigt mittels Laschen o. dgl., die einerseits zwei ebenfalls sich gegenüberliegende und im stumpfen Winkel zueinanderstehende Lagerzapfen tragen und andererseits als röhrenförmiges Mundstück des Ablegerohres 23 für das körnige Saatgut dient.

Am rückseitigen Ende dieses Längsträgers 18 ist ebenfalls im Abstand voneinander auf jeder Seite eine Öse 18a zur verstellbaren Halterung der Druckwalze 22 befestigt, durch welche die eingezogenen Rillen wieder zugedrückt werden.

Am vorderen Teil des Längsträgers 18 ist mittels Laschen ein senkrechtes inneres Führungsrohr 16b befestigt, das in einem am Werkzeugträger 10 befestigten äußeren Führungsrohr 16a mit größerem Durchmesser senkrecht verschiebbar gelagert ist, um damit den Längsträger 18 mit den Werkzeugen (Rillenziehvorrichtung und Druckwalzen) gegenüber dem Werkzeugträger 10 höhenverschiebbar zu lagern. Das innere Führungsrohr 16b nimmt eine Druckfeder 16c auf, die sich einerseits an der inneren Stirnwand des äußeren Führungsrohres 16a abstützt und damit eine vor der Höhenstellung der Druckwalze 22 abhängige selbsttätige Höheneinstellung ergibt. Die Druckwalze 22 ist mit ihrer Haltestange 22a in einer senkrechten Öse 18a gelagert am Längsträger 18 und zwar derart, daß diese Druckwalze 22 in der Höhe verstellt werden kann. Hierdurch ist es möglich, die Schneidtiefe der Scheiben der Rillenziehvorrichtung 19 in den zu bearbeitenden Boden und damit auch die Rillentiefe je nach Bodenoberflächenbeschaffenheit unterschiedlich einzustellen.

Um die Höhenverschiebung des inneren Führungsrohres 16b innerhalb des äußeren Führungsrohres 16a leichtlaufend zu gestalten, ist das innere Führungsrohr 16b wagenartig mit Rollen 26 ausgestattet. Dabei ist das Führungsrohr 16b mittels eines Anschlages 27 nach unten begrenzt. Der Anschlag 27 wird im Ausführungsbeispiel von einer Schraube 27a gebildet.

Sofern das Eigengewicht des Saegerätes nicht ausreicht, ist es bevorzugt, unterschiedliche Zusatzgewichte 25 am Rahmen 11 zu lagern, um damit den Andruck der Druckwalze 22 auf dem der Bodenoberfläche einerseits und die gleichmäßige Schnittiefe der Scheiben der Rillenziehvorrichtung 19 zu gewährleisten.

**Patentansprüche**

1. Durch Kraftzug bewegbares Saegerät mit einem Saatgutvorratsbehälter (13) und davon ausgehenden Ablegerohren (24) für das Saatgut mit mehreren vorgeschalteten, jeweils eine Saerille in den Boden einarbeitenden Rillenziehvorrichtungen (19) aus Schneidscheiben (20) und Rillenerweiterungsscheiben (21a, 21b), zwischen denen jeweils ein Ablegerohr (24) mündet, wobei jede Rillenziehvorrichtung (19) mit einer nachgeschalteten Druckwalze (22) an einem gemeinsamen, an einem Werkzeugträger (10) gelagerten Längsträger (18) angeordnet sind, der mittels einer aus zwei ineinander geführten und gegeneinander abgefederten Führungsrohren (16a, 16b) gebildeten Führungseinrichtung (16) selbsttätig in der Höhe verstellbar gelagert ist, dadurch gekennzeichnet, daß der Längsträger (18) ausschließlich senkrecht verschiebbar an dem Werkzeugträger (10) mittels der Führungseinrichtung (16) gelagert ist, deren äußeres Führungsrohr (16a) starr an dem Werkzeugträger (10) und deren inneres Führungsrohr (16b) starr an dem Längsträger (18) befestigt sind, und daß das innere Führungsrohr (16b) wagenartig mittels Rollen (26) in dem äußeren Führungsrohr (16a) teleskopartig verschiebbar gelagert ist, wobei die Rillenziehvorrichtung (19) und die nachgeschaltete Druckwalze (22) gegeneinander und gegenüber dem Längsträger (18) lageunveränderlich festgelegt sind.

2. Saegerät nach Anspruch 1, dadurch gekennzeichnet, daß der Abstand der zwei ineinander geführten Führungsrohre (16a, 16b) mittels einer Druckfeder (16c) stufenlos veränderbar ausgebildet ist.

3. Saegerät nach Anspruch 1 oder 2, dadurch gekennzeichnet, daß an dem äußeren Führungsrohr (16a) ein nach innen vorstehender, die Bewegung der Rollen (26) begrenzender Anschlag (27) angeordnet ist.

4. Saegerät nach Anspruch 1, dadurch gekennzeichnet, daß die Achsen (21c) der Rillenerweiterungsscheiben (21a, 21b) und die Achsen (22a) der zugeordneten Druckwalzen (22) satzweise gegeneinander in Längsrichtung des Längsträgers (18) versetzt zueinander festgelegt sind.

5. Saegerät nach Anspruch 1, dadurch gekennzeichnet, daß die Schneidscheiben (20) und die Rillenerweiterungsscheiben (21a, 21b) in ihrem Lagewinkel und/oder in ihrem Abstand zueinander verstellbar an dem Längsträger gelagert sind.

**Claims**

1. Tractor-drawn sowing apparatus having a seed hopper (13) and deposit tubes (24) extending therefrom for the seeds, and having a plurality of series-connected groove-making devices (19) which each make a sowing groove in the soil and are formed from cutting discs (20) and groove-widening discs (21a, 21b), a deposit tube (24) discharging between each of said discs, wherein each groovemaking device (19) and a downstream-connected pressure roller (22) are disposed on a common longitudinal support (18) which is mounted on a tool support (10) and is mounted by means of a guide mechanism (16) — formed from two guide tubes (16a, 16b) which are guided one inside the other and are spring-mounted relative to one another — so as to be vertically adjustable in an automatic manner, characterised in that the longitudinal support (18) is mounted on the tool support (10) by means of the guide mechanism (16) excluvively in a vertically displaceable manner, the outer guide tube (16a) of said guide mechanism being rigidly mounted on the tool support (10) and the inner guide tube (16b) of said guide mechanism being rigidly mounted on the longitudinal support (18), and characterised in that the inner guide tube (16b) is mounted in the outer guide tube (16a) in a telescopically displaceable manner by means of rollers (26), wherein the groove-making device (19) and the downstream-connected pressure roller (22) are secured in a fixed position relative to one another and relative to the longitudinal support (18).

2. Sowing apparatus according to claim 1, characterised in that the spacing between the two guide tubes (16a, 16b), which are guided one inside the other, is adapted to be steplessly adjustable by means of a compression spring (16c).

3. Sowing apparatus according to claim 1 or 2, characterised in that an inwardly protruding stop (27), which limits the movement of the rollers (26), is disposed on the outer guide tube (16a).

4. Sowing apparatus according to claim 1, characterised in that the axles (21c) of the groove-widening discs (21a, 21b) and the axles (22a) of the associated pressure rollers (22) are secured in groups relative to one another longitudinally of the longitudinal support (18) so as to be offset from one another.

5. Sowing apparatus according to claim 1, characterised in that the cutting disc (20) and the groove-widening discs (21a, 21b) are mounted on the longitudinal support so as to be adjustable in respect of their angular position relative to one another and/or in respect of their spacing from one another.

**Revendications**

1. Semoir pouvant être déplacé par traction mécanique, comportant un réservoir à semence (13) et des tubes de dépôt (24) partant de celui-ci, destinés à la semence, ainsi que plusieurs dispositifs de creusement de sillon (19) placés en avant, ménageant chacun un sillon de semis dans le sol, formés de disques de coupe (20) et de disques d'élargissement de sillon (21a, 21b) entre lesquels débouche chaque fois un tube de dépôt (24), chaque dispositif de creusement de sillon (19) étant disposé, avec un rouleau de pression (22) placé en arrière, sur un longeron commun (18) monté sur un port'outils (10) et qui est monté de façon réglable automatiquement en hauteur au moyen d'un dispositif de guidage (16) formé de deux tubes de guidage (16a, 16b) guidés l'un dans l'autre et soutenus élastiqueqment l'un par rapport à l'autre, caractérisé par le fait que le longeron (18) est monté sur le porte-outils (10) de manière à pouvoir coulisser exclusivement verticalement au moyen du dispositif de guidage (16) dont le tube de guidage extérieur (16a) est fixé rigidement au longeron (18) et que le tube intérieur de guidage (16b) est monté de manière à pouvoir coulisser télescopiquement dans le tube de guidage extérieur (16a) à la façon d'un chariot, au moyen de galets (26), le dispositif de creusement de sillon (19) et le rouleau de pression (22) placé en arrière étant fixés dans une position invariable l'un par rapport à l'autre et par rapport au longeron (18).

2. Semoir selon la revendication 1, caractérisé par le fait que l'espacement de deux tubes de guidage (16a, 16b) guidés l'un dans l'autre est rendu variable de façon continue au moyen d'un ressort de compression (16c).

3. Semoir selon l'une des revendications 1 et 2, caractérisé par le fait que sur le tube extérieur de guidage (16a) est disposée une butée (27) faisant saillie vers l'intérieur, limitant le mouvement des galets (26).

4. Semoir selon la revendication 1, caractérisé par le fait que les axes (21c) des disques d'élargissement de sillon (21a, 21b) et les axes (22a) des rouleaux de pression adjoints (22) sont fixés avec décalage latéral l'un par rapport à l'autre, par jeux, dans la direction longitudinale du longeron (18).

5. Semoir selon la revendication 1, caractérisé par le fait que les disques de coupe (20) et les disques d'élargissement de sillon (21a, 21b) sont montés sur le longeron de façon réglable quant à leur angle de position et/ou à leur distance mutuelle.

Fig.1

Fig.2

# Fig. 3

# Fig.4